# EUROPÄISCHE PATENTANMELDUNG

(11) **EP 0 838 744 A1**
(43) Veröffentlichungstag der Anmeldung: **29.04.1998**
(21) Anmeldenummer: 97112979.6
(22) Anmeldetag: 29.07.1997
(51) Int. Cl.: G05D 16/20, F16K 31/40

(54) **Druckregler mit Schaltfunktion**

(30) Priorität: 18.10.1996 DE 29618080 U
(71) Anmelder: Festo KG, D-73734 Esslingen (DE)
(72) Erfinder: Stoll, Kurt, Dr., 73732 Esslingen (DE); Berner, Michael, 73230 Kirchheim (DE)
(74) Vertreter: Abel, Martin, Dipl.-Ing.

(57) **Zusammenfassung**

Es wird ein Druckregler vorgeschlagen, der einen Primärkanal (2), einen Sekundärkanal (3) sowie ein zwischen diese Kanäle eingeschaltetes Regelventil (5) aufweist. Ferner ist eine von einer bewegbaren Wand (28) begrenzte Regelkammer (26) vorhanden, die an der Außenseite von einer Stellfeder (33) beaufschlagt ist und an der Innenseite mit einem Ventilglied (36) des Regelventils (5) zusammenwirkt. Der Primärkanal (2), der Sekundärkanal (3) und die getrennte Regelkammer (26) sind an eine elektrisch betätigbare Steuerventileinrichtung (37) angeschlossen, die sich derart betätigen läßt, daß entweder zwischen der Regelkammer (26) und dem Sekundärkanal (3) oder zwischen der Regelkammer (26) und dem Primärkanal (2) eine Verbindung vorliegt. Auf diese Weise ist es möglich, an den Sekundärkanal angeschlossen Verbraucher nach Bedarf anzusteuern.

## Beschreibung

Die Erfindung betrifft einen Druckregler, mit einem Primärkanal, der im Betrieb unter einem Primärdruck stehendes Druckmedium führt, mit einem Sekundärkanal, der zur Führung eines unter einem Sekundärdruck stehenden Druckmediums vorgesehen ist, mit einem in die Verbindung zwischen den Primärkanal und den Sekundärkanal eingeschalteten Regelventil, das ein zur Beeinflussung des dem Druckmedium zur Verfügung stehenden Durchströmquerschnittes dienendes Ventilglied aufweist, und mit einer mit dem Sekundärdruck beaufschlagbaren Regelkammer, die von einer bewegbaren Wand begrenzt ist, die auf ihrer der Regelkammer abgewandten Außenseite von einer Stellfeder beaufschlagt ist und auf ihrer der Regelkammer zugewandten Innenseite mit dem Ventilglied zusammenwirkt.

Derartige Druckregler werden in Druckluftsystemen eingesetzt, um einen Arbeitsdruck (Sekundärdruck) bereitzustellen, der niedriger als der Netzdruck (Primärdruck) ist und weitgehend konstant gehalten wird. Die Druckregelung erfolgt durch eine meist von einer Membrane gebildeten bewegbaren Wand, die einerseits mit dem Sekundärdruck und andererseits mit der Druckkraft einer Stellfeder beaufschlagt ist. Bei ansteigendem Sekundärdruck verlagert sich die bewegbare Wand entgegen der Federkraft, so daß sich über das zugeordnete Ventilglied der Durchströmquerschnitt zwischen dem Primärkanal und dem Sekundärkanal verringert und der Sekundärdruck reduziert wird. Bei zu starkem Druckabfall an der Sekundärseite wird hingegen durch die Federkraft das Regelventil weiter geöffnet, so daß durch das vermehrt nachströmende Druckmedium der Sekundärdruck gehalten wird. Durch Veränderung der Federkraft läßt sich die Einstellung des gewünschten Sekundärdruckes variieren.

Bei vielen Anwendungen werden Druckregler eingesetzt, um Verbraucher wie Farbspritzanlagen oder Arbeitszylinder über eine bestimmte Zeit unter einen bestimmten Druck zu setzen. Dabei müssen die an den Sekundärkanal angeschlossenen Verbraucher von Zeit zu Zeit zu- bzw. abgeschaltet werden. Dies erfolgt in der Regel durch ein in die Verbindung zwischen Sekundärkanal und Verbraucher eingeschaltetes Ventil. Wegen der zu steuernden hohen Durchflußwerte kommt hierbei meist ein vorgesteuertes Ventil zum Einsatz. Diese steuertechnischen Maßnahmen sind aufwendig und teuer.

Es ist die Aufgabe der vorliegenden Erfindung, Maßnahmen zu treffen, die beim Betreiben der an den Sekundärkanal angeschlossenen Verbraucher deren bedarfsgemäßes Zu- und Abschalten mit weniger Aufwand gestatten.

Zur Lösung dieser Aufgabe ist vorgesehen, daß der Primärkanal, der Sekundärkanal und die getrennt von dem Sekundärkanal ausgebildete Regelkammer des Druckreglers an eine elektrisch betätigbare Steuerventileinrichtung angeschlossen sind, die zwischen einer Arbeitsstellung, in der sie zwischen der Regelkammer und dem Sekundärkanal eine Verbindung herstellt, und einer Absperrstellung, in der sie eine Verbindung zwischen der Regelkammer und dem Primärkanal herstellt, umschaltbar ist.

Ist die Steuerventileinrichtung in die Arbeitsstellung geschaltet, befindet sich der Druckregler im üblichen Regelbetrieb. Dabei ist die Regelkammer unter Vermittlung der Steuerventileinrichtung an den Sekundärkanal angeschlossen, so daß in ihr wie üblich der Sekundärdruck herrscht. Dieser Sekundärdruck wird in der eingangs geschilderten Weise auf einen vorbestimmten Wert eingeregelt. Durch Umschalten der Steuerventileinrichtung in die Absperrstellung wird die Verbindung zwischen dem Sekundärkanal und der Regelkammer unterbrochen. Gleichzeitig erfolgt eine Verbindung zwischen dem Primärkanal und der Regelkammer. Da nun die die Regelkammer begrenzende bewegbare Wand von dem hohen Primärdruck beaufschlagt ist, verlagert sie sich entgegen der Federkraft, woraus ein praktisch schlagartiges Schließen des Regelventils resultiert, so daß der Sekundärkanal vom Primärkanal abgesperrt ist. Infolge der elektrischen Betätigungsweise der Steuerventileinrichtung kann diese nach Bedarf und auch ferngesteuert betätigt werden, so daß ein Unterbrechen der Druckluftzufuhr zu einem angeschlossenen Verbraucher nicht mehr unter Verwendung eines nachgeschalteten Ventils vorgenommen werden muß, sondern über den Druckregler selbst erfolgen kann. Dieser übernimmt praktisch zusätzlich die Funktion eines vorgesteuerten Schaltventils. Es liegt somit ein nach Bedarf absperrbarer Druckregler vor, der sich vielfältig einsetzen läßt und über eine zusätzliche Sicherheitsfunktion verfügt, indem sich der Fluiddurchgang durch ihn nach Wunsch absperren läßt.

Vorteilhafte Weiterbildungen der Erfindung gehen aus den Unteransprüchen hervor.

Zweckmäßigerweise verfügt die Steuerventileinrichtung zu ihrer Betätigung über wenigstens eine elektromagnetische Betätigungseinrichtung. Vorzugsweise ist die Steuerventileinrichtung von einem elektrisch betätigbaren Magnetventil gebildet, das insbesondere als 3/2-Wegeventil ausgestaltet ist.

Um eine besonders kompakte Bauform zu erzielen, ist die Steuerventileinrichtung vorzugsweise am Gehäuse des Druckreglers festgelegt, wobei sie ohne weiteres auch in das Gehäuse integriert sein kann.

Nachfolgend wird die Erfindung anhand der beiliegenden Zeichnung näher erläutert. In dieser zeigen:
- Fig. 1: eine erste Bauform des erfindungsgemäßen Druckreglers in einem teilweisen Längsschnitt, wobei die Steuerventileinrichtung und deren Verbindungen zum Druckregler der besseren Übersichtlichkeit halber lediglich schematisch angedeutet sind, und
- Fig. 2: eine Seitenansicht des Druckreglers aus Fig. 1 mit Blickrichtung gemäß Pfeil II, wobei die am Gehäuse des Druckreglers angebaute Steuerventileinrichtung ersichtlich ist.

Der in der Zeichnung abgebildete Druckregler verfügt über ein zweckmäßigerweise mehrteiliges Gehäuse 1. In dem Gehäuse 1 sind ein Primärkanal 2 und ein Sekundärkanal 3 ausgebildet. Beide Kanäle 2, 3 münden jeweils einerseits über eine Anschlußöffnung 4, 4' an der Außenfläche des Gehäuses 1 aus, so daß die Möglichkeit besteht, nicht näher dargestellte weiterführende Druckmediumleitungen, insbesondere Druckluftleitungen, anzuschließen. Unter üblichen Einsatzbedingungen steht auf diese Weise der Primärkanal 2 mit einer Druckmittelquelle P in Verbindung, die unter einem Primärdruck stehendes Druckmedium, vorliegend Druckluft, bereitstellt. Der Sekundärkanal 3 ist mit einem nur schematisch angedeuteten Verbraucher V verbindbar, der mit Druckmedium versorgt werden soll, das möglichst unter einem konstanten Druck steht, der niedriger ist als der eingangsseitige Primärdruck und der daher als Sekundärdruck bezeichnet sei. Im Betrieb herrscht also in dem Sekundärkanal 3 ein Sekundärdruck, der von dem höheren Primärdruck des Primärkanals 2 abgeleitet ist.

Der Sekundärdruck ist über die vom Primärkanal 2 zum Sekundärkanal 3 durchfließende Menge an Druckmedium regelbar. Dies geschieht durch ein Regelventil 5, das in die Verbindung zwischen dem Primärkanal 2 und dem Sekundärkanal 3 eingeschaltet ist.

Das Regelventil 5 verfügt über ein Ventilglied 6, das in zwei einander entgegengesetzten Stellrichtungen, einer Öffnungsrichtung 7 und einer Schließrichtung 8, relativ zum Gehäuse 1 bewegbar ist.

Das Ventilglied 6 ist in einem im Innern des Gehäuses 1 befindlichen Aufnahmeraum 9 bewegbar aufgenommen. Der Aufnahmeraum 9 ist beispielsgemäß von einem der Anschlußöffnung 4 entgegengesetzten erweiterten Endabschnitt des Primärkanals 2 gebildet.

Der Primärkanal 2 und der Sekundärkanal 3 kommunizieren miteinander über eine Durchströmöffnung 12. An dem diese Durchströmöffnung 12 begrenzenden Randbereich ist ein dem Ventilglied 6 zugewandter ringförmiger Ventilsitz 13 vorgesehen. Liegt das Ventilglied 6 an diesem Ventilsitz 13 an, ist die Verbindung zwischen dem Primärkanal 2 und dem Sekundärkanal 3 abgesperrt und verschlossen. Durch Verlagerung in Öffnungsrichtung 7 läßt sich das Ventilglied 6 in verschiedene Offenstellungen verbringen, in denen es mehr oder weniger weit von dem Ventilsitz 13 abgehoben ist und dadurch zwischen dem Primärkanal 2 und dem Sekundärkanal 3 einen Durchströmquerschnitt freigibt, der vom Grad der Offenstellung abhängt.

Das Ventilglied 6 ist von einer Rückstellfeder 14 ständig in Schließrichtung 8 beaufschlagt. Diese Rückstellfeder 14 stützt sich im Bereich des Aufnahmeraumes 9 zwischen dem Ventilglied 6 und einer gegenüberliegenden gehäusefesten Abstützpartie 15 ab. Die Rückstellfeder 14 kann vorzugsweise relativ schwach ausgelegt sein, da sie unabhängig von der Stellung des Ventilgliedes 6 keine oder zumindest nur geringe fluidische Gegenkräfte zu überwinden hat. Erreicht wird dies durch eine Druckausgleichseinrichtung, die über einen oder mehrere Ausgleichs-Fluidkanäle 16 verfügt, über die ein auf der Primärseite axial hinter dem Ventilglied 6 befindlicher, zum Primärkanal 2 hin abgedichteter Druckausgleichsraum 17 ständig mit dem Sekundärkanal 3 in Verbindung steht.

Der mindestens eine Ausgleichs-Fluidkanal 16 erstreckt sich beispielsgemäß zumindest teilweise in einem fest mit dem Ventilglied 6 verbundenen Betätigungsstößel 18. Dieser erstreckt sich ausgehend vom Ventilglied 6 in Richtung zum Sekundärkanal 3, wobei er einen der Anschlußöffnung 4' entgegengesetzten Innenabschnitt 22 des Sekundärkanals 3 durchsetzt und anschließend durch eine den Sekundärkanal 3 begrenzende Trennwand 23 axial beweglich hindurchgeführt ist. Im Bereich der durchsetzten Durchbrechung 24 der Trennwand 23 trägt der Betätigungsstößel 18 zweckmäßigerweise einen Dichtring 21, so daß die Bereiche innerhalb und außerhalb der Trennwand 23 fluiddicht voneinander abgetrennt sind.

Die Trennwand 23 ist Teil einer Begrenzungswand 25, die eine vom Sekundärkanal 3 und vom Primärkanal 2 getrennte Regelkammer 26 umschließt bzw. definiert. In diese Regelkamer 26 ragt der Betätigungsstößel 18 mit einem Betätigungsende 27 hinein.

Ein Abschnitt der Begrenzungswand 25 ist von einer bewegbaren Wand 28 gebildet, die beispielsgemäß der Trennwand 23 in Schließrichtung 8 mit Abstand gegenüberliegt.

Die bewegbare Wand 28 ist beim Ausführungsbeispiel zumindest teilweise von einer luftundurchlässigen, biegeflexiblen und insbesondere gummielastischen Membrane 32 gebildet. Diese ist im Bereich ihres äußeren umlaufenden Randes 30 dicht gehäusefest eingespannt. Im zentralen Bereich ist eine zweckmäßigerweise aus starrem Material bestehende Beaufschlagungspartie 31 vorgesehen.

Die bewegbare Wand 28 ist auf ihrer der Regelkammer 26 axial abgewandten Außenseite 34 von einer Stellfeder 33 beaufschlagt. Beispielsgemäß ist die Stellfeder 33 von einer einzigen, als Schrauben-Druckfeder ausgebildeten Feder gebildet, sie kann jedoch durchaus auch aus mehreren Einzelfedern zusammengesetzt sein. Die Federkraft 36 der Stellfeder 33 wirkt in Öffnungsrichtung 7 auf die bewegbare Wand 28 ein, die dann ihrerseits mit entsprechender Kraftrichtung den Betätigungsstößel 18 beaufschlagt, der an der der Regelkammer 26 zugewandten Innenseite 35 der bewegbaren Wand 28 insbesondere lose anliegt. Das Zusammenwirken der bewegbaren Wand 28 mit der Stellfeder 33 und dem Betätigungsende 27 des Betätigungsstößels 18 erfolgt beispielsgemäß im Bereich der Beaufschlagungspartie 31, die einen über die Membrane 32 axial bewegbar aufgehängten Abschnitt der bewegbaren Wand 28 bildet.

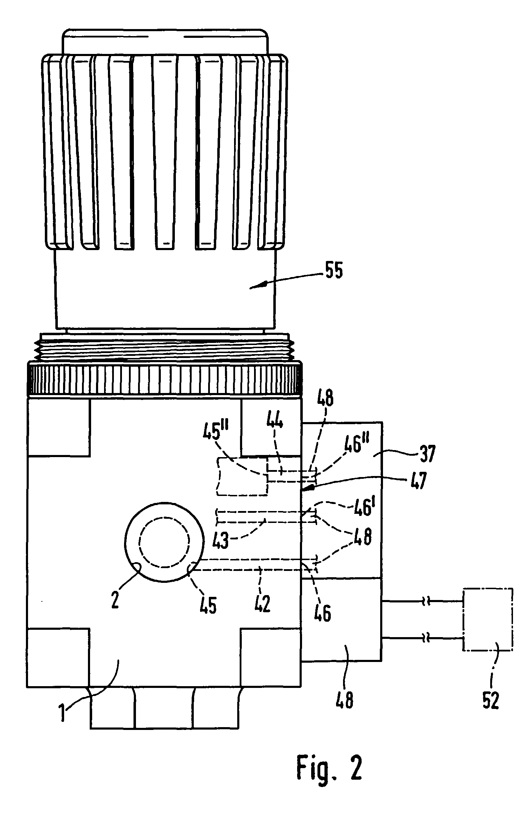

Der Druckregler ist des weiteren mit einer Steuerventileinrichtung 37 ausgestattet. Diese ist vorzugsweise, wie aus Fig. 2 hervorgeht, als Baueinheit mit dem Gehäuse 1 ausgeführt und insbesondere an dessen Außenfläche lösbar befestigt. Es wäre auch denkbar, die Steuerventileinrichtung 37 zumindest teilweise und vorzugsweise vollständig versenkt im Gehäuse 1 vorzusehen, so daß sie in das Gehäuse 1 integriert wäre und eine besonders kompakte Baueinheit vorläge.

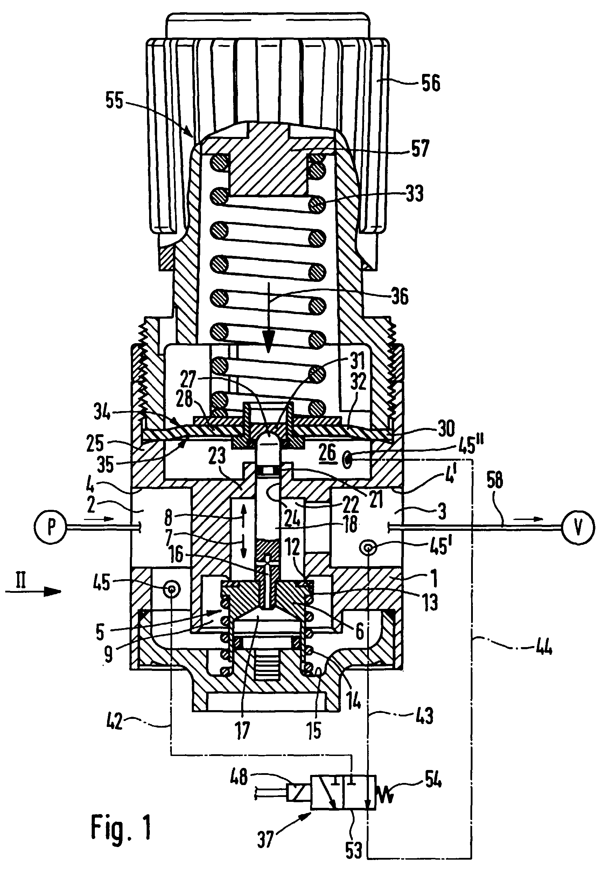

Der Primärkanal 2, der Sekundärkanal 3 und die Regelkammer 26 stehen jeweils mit einem ihnen separat zugeordneten Steuerkanal in Verbindung, die nachfolgend als erste, zweite und dritte Steuerkanäle 42, 43, 44 bezeichnet seien. In Fig. 1 sind sie lediglich strichpunktiert angedeutet. Über den jeweils zugeordneten Steuerkanal 42, 43, 44 stehen der Primärkanal 2, der Sekundärkanal 3 und die Regelkammer 26 unabhängig voneinander mit der Steuerventileinrichtung 37 in fluidischer Verbindung.

Zweckmäßigerweise ist die Anordnung konstruktiv so ausgeführt, daß ein jeweiliger Steuerkanal 42, 43, 44 einenends im Innern des Gehäuses 1 in den zugeordneten Primärkanal 2, Sekundärkanal 3 bzw. die Regelkammer 26 mündet - Mündungen 45, 45', 45'' - und andernends über Mündungen 46, 46', 46'' an einer Montagefläche 47 außen am Gehäuse 1 ausmündet. An dieser Montagefläche 47 ist die Steuerventileinrichtung 37 angebaut, die über mit den Steuerkanälen 42, 43, 44 kommunizierende, in Fig. 2 lediglich schematisch angedeutete Ventilkanäle 48 verfügt.

Die Steuerventileinrichtung 37 verfügt über ein nicht näher dargestelltes Steuerventilglied, das beispielsgemäß zwischen zwei Stellungen umschaltbar ist, wobei der Umschaltvorgang unter Vermittlung einer elektromagnetischen Betätigungseinrichtung 48 der elektrisch betätigbaren Steuerventileinrichtung 37 ausgelöst werden kann. Bei der Steuerventileinrichtung 37 handelt es sich also zweckmäßigerweise um ein elektrisch betätigbares Mehrwegeventil, wobei sowohl eine direkte Betätigung oder eine indirekte, vorgesteuerte Betätigung möglich wäre. Beispielsgemäß ist eine direkte Betätigung vorgesehen, und die Betätigungseinrichtung 48 ist von einer Elektromagneteinrichtung gebildet, wobei die Steuerventileinrichtung 37 insgesamt ein Magnetventil darstellt. Die Betätigungseinrichtung 48 ist mit einer nur schematisch angedeuteten Schalteinrichtung 52 verbindbar, über die die zur Betätigung erforderlichen elektrischen Steuersignale hervorgerufen werden. Die Schalteinrichtung 52 kann je nach Anwendungsfall beliebiger Art sein, beispielsweise ein einfacher Ein-/Ausschalter oder aber ein elektronisches Gerät oder ein Relais.

Wie aus der schematischen Darstellung der Fig. 1 hervorgeht, ist die beispielsgemäße Steuerventileinrichtung 37 von einem elektromagnetisch betätigten 3/2-Wegeventil gebildet. Sein Steuerventilglied 53 ist durch eine Federkraft 54 derart beaufschlagt, daß die Steuerventileinrichtung üblicherweise die aus Fig. 1 hervorgehende Arbeitsstellung einnimmt. Durch elektrische Erregung der wenigstens einen Magnetspule der elektromagnetischen Betätigungseinrichtung 48 läßt sich die Steuerventileinrichtung bei Bedarf in eine Absperrstellung umschalten.

Solange die Steuerventileinrichtung 37 die Arbeitsstellung einnimmt, befindet sich der Druckregler im Regelbetrieb. Hierbei sind der Sekundärkanal 3 und die Regelkammer 26 über ihre zweiten und dritten Steuerkanäle 43, 44 und die zwischengeschaltete Steuerventileinrichtung 37 fluidisch miteinander verbunden. Gleichzeitig ist der an den Primärkanal 2 angeschlossene erste Steuerkanal 42 abgesperrt und insbesondere von dem zweiten und dritten Steuerkanal 43, 44 abgetrennt. Somit herrscht in der Regelkammer 26 ebenfalls der Sekundärdruck, so daß die bewegbare Wand 28 mit einer daraus resultierenden Druckkraft in Schließrichtung 8 beaufschlagt ist, der die in Öffnungsrichtung 7 wirkende Federkraft 36 der Stellfeder 33 entgegenwirkt. Entsprechend der daraus resultierenden Gleichgewichtsstellung der bewegbaren Wand 28 nimmt das über den Betätigungsstößel 18 beaufschlagte Ventilglied 6 eine Offenstellung ein, die zur Folge hat, daß im Sekundärkanal 3 und dem mit diesem verbundenen Verbraucher ein im Vergleich zum Primärdruck reduzierter Sekundärdruck herrscht.

Die Höhe des Sekundärdruckes läßt sich zweckmäßigerweise variabel einstellen. Zu diesem Zweck verfügt der Druckregler ergänzend über eine Einstelleinrichtung 55, die es ermöglicht, die von der Stellfeder 33 auf die bewegbare Wand 28 ausgeübte Federkraft zu verändern und nach Bedarf vorzugeben.

Die beispielsgemäße Einstelleinrichtung 55 verfügt über ein Drehglied 56, das mit einem Abstützglied 57 zusammenwirkt, an dem sich die Stellfeder 33 mit ihrem der bewegbaren Wand 28 entgegengesetzten Ende abstützt. Durch Verdrehen des Drehgliedes 56 läßt sich das Abstützglied 57 in Längsrichtung der Stellfeder 33 verlagern, insbesondere im Rahmen einer Schraubbewegung, so daß sich die Vorspannung der Stellfeder 33 ändert.

Bei einer Luftentnahme am Sekundärkanal 3 durch den Verbraucher V sinkt der Sekundärdruck im Sekundärkanal 3 und somit auch in der Regelkammer 26, so daß die Federkraft 36 auf Grund der reduzierten, entgegenwirkenden Druckkraft das Regelventil 5 weiter öffnet und der Sekundärdruck wieder ansteigt. Wird hingegen an der Sekundärseite keine Luft entnommen, steigt der Sekundärdruck an und drückt die bewegbare Wand 28 in Schließrichtung 8 gegen die Stellfeder 33. Dadurch bewegt die Rückstellfeder 14 das beispielsgemäß nicht fest mit der bewegbaren Wand 28 verbundene Ventilglied 6 in Schließrichtung 8, bis die Durchströmöffnung 12 letztlich abgesperrt ist. Da die Regelkammer 26 über keine Abströmöffnung verfügt, strömt erst dann wieder Druckluft von der Primärseite nach, wenn am Sekundärkanal 3 Luft entnommen wird. Insgesamt ist das Regulieren des eingestellten Sekundärdruckes somit mit einem ständigen Öffnen und Schließen des Regelventils 5 verbunden.

Durch Betätigung der Steuerventileinrichtung 37 läßt sich diese aus der beschriebenen Arbeitsstellung in eine Absperrstellung umschalten. In dieser ist die Regelkammer 26 nicht mehr mit dem Sekundärkanal 3, sondern mit dem Primärkanal 2 verbunden. Die Verbindung geschieht über den ersten und dritten Steuerkanal 42, 44 in Verbindung mit der zwischengefügten Steuerventileinrichtung 37. Gleichzeitig ist der mit dem Primärkanal 2 verbundene zweite Steuerkanal 43 abgesperrt.

Die Absperrstellung hat zur Folge, daß in der Regelkammer 26 der hohe Primärdruck anliegt. Die aus ihm resultierende Druckkraft ist größer als die Federkraft 36 und bewirkt augenblicklich ein Verlagern der bewegbaren Wand 28 in Schließrichtung 8, so daß das Regelventil 5 umgehend schließt. Auf diese Weise ist der Fluiddurchgang zwischen dem Primärkanal 2 und dem Sekundärkanal 3 abgesperrt, und es strömt unabhängig von dem im Sekundärkanal 3 herrschenden Druck keine Druckluft mehr nach. Der Druckregler verfügt somit über die integrierte Funktion eines Absperrventils. Dies erlaubt es in vielen Fällen, am Verbraucher selbst auf ein entsprechendes Absperrventil zu verzichten. Handelt es sich bei dem Verbraucher V beispielsweise um ein Lackiergerät, zum Beispiel um eine Sprüheinrichtung bzw. Sprühpistole, so kann die Luftzufuhr sehr einfach durch ein an die Steuerventileinrichtung 37 gesendetes elektrisches Signal nach Bedarf unterbrochen werden. Das Absperren erfolgt somit unmittelbar am Druckregler selbst, so daß die zum Verbraucher V führende, beispielsgemäß flexible Druckmittelleitung 58 drucklos gehalten werden kann.

## Patentansprüche

1. Druckregler, mit einem Primärkanal (2), der im Betrieb unter einem Primärdruck stehendes Druckmedium führt, mit einem Sekundärkanal (3), der zur Führung eines unter einem Sekundärdruck stehenden Druckmediums vorgesehen ist, mit einem in die Verbindung zwischen den Primärkanal (2) und den Sekundärkanal (3) eingeschalteten Regelventil (5), das ein zur Beeinflussung des dem Druckmedium zur Verfügung stehenden Durchströmquerschnittes dienendes Ventilglied (6) aufweist, und mit einer mit dem Sekundärdruck beaufschlagbaren Regelkammer (26), die von einer bewegbaren Wand (28) begrenzt ist, die auf ihrer der Regelkammer (26) abgewandten Außenseite (34) von einer Stellfeder (33) beaufschlagt ist und auf ihrer der Regelkammer (26) zugewandten Innenseite (35) mit dem Ventilglied (36) zusammenwirkt, dadurch gekennzeichnet, daß der Primärkanal (2), der Sekundärkanal (3) und die getrennt von dem Sekundärkanal (2) ausgebildete Regelkammer (26) des Druckreglers an eine elektrisch betätigbare Steuerventileinrichtung (37) angeschlossen sind, die zwischen einer Arbeitsstellung, in der sie zwischen der Regelkammer (26) und dem Sekundärkanal (3) eine Verbindung herstellt, und einer Absperrstellung, in der sie eine Verbindung zwischen der Regelkammer (26) und dem Primärkanal (2) herstellt, umschaltbar ist.

2. Druckregler nach Anspruch 1, dadurch gekennzeichnet, daß die Steuerventileinrichtung (37) über wenigstens eine elektromagnetische Betätigungseinrichtung (48) verfügt.

3. Druckregler nach Anspruch 2, dadurch gekennzeichnet, daß die Steuerventileinrichtung (37) von einem Magnetventil gebildet ist.

4. Druckregler nach einem der Ansprüche 1 bis 3, dadurch gekennzeichnet, daß die Steuerventileinrichtung (37) von einem 3/2-Wegeventil gebildet ist.

5. Druckregler nach einem der Ansprüche 1 bis 4, dadurch gekennzeichnet, daß die Steuerventileinrichtung (37) am Gehäuse (1) des Druckreglers angeordnet ist.

6. Druckregler nach einem der Ansprüche 1 bis 5, dadurch gekennzeichnet, daß der Stellfeder (33) eine Einstelleinrichtung (55) zugeordnet ist, mit der die von der Stellfeder (33) auf die bewegbare Wand (28) ausgeübte Federkraft (36) variabel einstellbar ist.

7. Druckregler nach einem der Ansprüche 1 bis 6, dadurch gekennzeichnet, daß die bewegbare Wand (28) wenigstens teilweise von einer fluidundurchlässigen, biegeflexiblen Membrane (32) gebildet ist.
